# EUROPEAN PATENT APPLICATION

(11) **EP 0 959 026 A1**
(43) Date of publication of application: **24.11.1999**
(21) Application number: 99201470.4
(22) Date of filing: 11.05.1999
(51) Int. Cl.: B65G 45/26

(54) **Method and apparatus for collecting and discharging relatively light material**

(30) Priority: 12.05.1998 NL 1009142
(71) Applicant: Machinefabriek "Brabant"D. van Opstal B.V., 4825 BD Breda (NL)
(72) Inventor: van Opstal, Rudolphus Wilhelmus Maria, 4761 VC Zevenbergen (NL)
(74) Representative: Ottevangers, Sietse Ulbe

(57) **Abstract**

Method for collecting and discharging relatively light, in particular granular or powdery material falling from conveying means, wherein the material is collected in collecting means and discharged via a discharge channel, wherein the discharge channel is substantially gutter-shaped and provided, on at least one side thereof, with an inlet opening which is closable by closing means, wherein during use, during a first phase, material is fed into the discharge channel, via the at least one inlet opening, after which the closing means are closed, wherein at least in a second phase, an air flow is generated in the discharge channel and material received in the discharge channel is discharged from the discharge channel via an outlet opening by the air flow.

## Description

The invention relates to a method for collecting and discharging relatively light, in particular granular or powdery material falling from a conveying means. Such method is known from practice.

In this known method, which is for instance applied in the agro-industry, a receptacle is disposed underneath a conveying apparatus, such as a conveyor belt, while material falling from the conveyor belt, such as powder, granules, soil and the like, is collected in the receptacle. Next, by means of a screw conveyor fitted in the receptacle, this material can be discharged therefrom. During for instance pouring over, this falling material may fall next to or over the conveyor belt, or may come from the return part of such a conveyor belt.

This known method has as a drawback that a relatively large portion of the material stays behind in or under the apparatus, which will lead to accumulation of the material and contamination of the apparatus. Moreover, such accumulation of material is dangerous in view of inflammability, possible danger of dust explosions and other failures in the apparatus. There is also the risk of the environment of the apparatus being contaminated with the material, while, moreover, product loss may occur, also due to the fact that the collected material cannot be reused. Further, the accumulated material may cause an increased wear of the apparatus. Since a relatively large part of the fallen material stays behind in the apparatus, or at least cannot be discharged therefrom fast enough, mixing of fallen material will occur during the handling of different batches of products, at least of different products, as a consequence of which this mixed material can no longer be used in the relevant production process. Of course, a part of these problems can be eliminated by regular cleaning of the apparatus, yet this is costly, in particular because of the loss of time and production.

The object of the invention is to provide a method of the type described in the preamble, wherein the drawbacks mentioned are avoided, while the advantages thereof are maintained. To that end, a method according to the invention is characterized by the features of claim 1.

In such method, material falling from the conveying apparatus can in the first phase be collected in the or each collecting channel, which material can readily be discharged therefrom in the second phase, by means of the air flow. Due to the fact that in the second phase, the closing means have been brought into the closed position, such that the relevant discharge channel is hermetically closed off at least to the collecting means, a sufficiently strong air flow can readily be obtained for entraining the material, or at least for causing it to move, without this requiring the generation of undesirably high air velocities, pressures and the like. Moreover, relatively simple, small and not very costly discharge means may suffice, in particular means for generating the or each air stream. This also involves the advantage that material falling into the collecting means during the second phase cannot be passed into the relevant discharge channel, or at least not so during the second phase, so that mixing thereof can readily be prevented. The relevant discharge channel can be emptied, or at least cleaned, in a suitable manner, before further material, for instance from another batch of comparable products or of another type of product, ends up in the discharge channel, while the material can be discharged in a particularly fast manner, so that no or only short waiting times occur.

In an advantageous embodiment, a method according to the invention is characterized by the features of claim 2.

The operation of collecting falling material by, or at least against the closing means during at least a portion of the second phase offers the advantage that during this second phase, said material is effectively prevented from ending up in the discharge channel connecting thereto, while during the first phase, the material collected by the closing means can in a particularly simple manner be passed from the valve directly into the relevant discharge channel, in principle without the interposition of any further means.

In further elaboration, a method according to the invention is further characterized by the features of claim 3.

By generating an air flow in the relevant discharge channel also during at least a portion of the first phase, at least a part of the falling material will be led away from the discharge channel already during the first phase, while this material is prevented from adhering in the discharge channel, for instance to the walls thereof. Thus, an even better operation is obtained, while, moreover, blockage of the discharge channel is prevented. In such method, the closing means for instance have to be closed only by the end of the first phase, for instance when a batch of products has been treated almost completely, which, without further measures, will result in a strengthening of the air flow. Thus, at least a substantial part of the material that has stayed behind in the discharge channel will be discharged as well. Through the use of reduced pressure for generating the air flow, material is readily prevented from being blown from the discharge channel.

In a particularly advantageous embodiment, a method according to the invention is further characterized by the features of claim 4.

If material collected in a discharge channel tends to stick to the wall of the discharge channel or to remain behind therein in any other manner, for instance in that this material cannot be directly entrained by the air flow, it is advantageous when during the second phase, agitating means are moved in the relevant discharge channel, such that material left behind therein is dislodged from the wall and moved into the air flow, for the further discharge thereof. This means that use can be made of a relatively small air flow, while the material need not, or at least not exclusively, be discharged by the agitating means, so that for instance smearing of the material by the agitating means can readily be prevented. Thus, an even better cleaning of the discharge channel can be obtained, also when not all material can directly be carried along by the relevant air flow.

The invention further relates to an apparatus for collecting and discharging, for instance, relatively light and in particular granular or powdery material falling from conveying means. Such apparatus is characterized by the features of claim 5.

In such an apparatus, which is in particular advantageous for the use of a method according to the invention, the collecting means can, during use, for instance be disposed under a conveying means such as a conveyor belt or chain, or a pour-over point, such that material falling from the conveying means is received in the collecting means. The collecting means connect to the at least one discharge channel, via which channel the collected material can be discharged, preferably for reuse. In the inlet opening of the discharge channel, formed between the collecting means and the at least one discharge channel, closing means are provided whereby said inlet opening can selectively be closed or released. When the closing means are in the closed position, a sufficiently strong air flow can be generated in the relevant discharge channel by means of relatively simple and inexpensive means, for removing the preferably granular or powdery material included therein. Moreover, the closing means prevent material from being fed back from the discharge channel to the collecting means, while further material is in a simple manner prevented from being passed from the collecting means into the relevant discharge channel.

In an advantageous embodiment, an apparatus according to the invention is further characterized by the features of claim 7.

During use of an apparatus according to the invention, it may occur that a part of the material collected in the discharge channel cannot completely, or at least not sufficiently, be entrained by the relevant air flow, for instance due to the fact that some adhesion of the material to the wall of the discharge channel occurs, or that relatively heavy material parts have ended up in the discharge channel. This may occur in particular when material has already been discharged from the discharge channel by means of an air flow while the closing means were maintained in the open position. To enable material that has as yet stayed behind in the discharge channel to be removed therefrom as well, this material can, by the mechanical means, be dislodged from the wall of the discharge channel and freely brought into the air stream, so that this material can as yet be discharged from the discharge channel via the at least one outlet opening. Preferably, this material is as yet carried away in the air stream.

In a particularly advantageous embodiment, an apparatus according to the invention is further characterized by the features of claim 9.

The use of a reduced pressure in the at least one discharge channel relative to the environment offers the advantage that material is readily prevented, in an even better manner, from being fed back from the discharge channel in the direction of the collecting means and the conveying direction, even when the closing means are entirely or partially open.

In a preferred embodiment, an apparatus according to the invention is characterized by the features of claim 10.

The walls tapering in the direction of the at least one inlet opening offer the advantage that guidance of the material to the or each discharge channel is obtained in a simple manner. The rounded shape and the smooth walls of the discharge channel offer the advantage that adhesion of material to the discharge chute is readily prevented, while, moreover, a proper cleaning is possible. Further, a substantially circular cross section of the discharge channel has the advantage that simple pivoting or rotating, mechanical means can be included for movement of material collected in the discharge channel. By providing the collecting means with a housing that surrounds the conveying apparatus, or at least a conveying face thereof, it is readily ensured that all material coming from the conveying apparatus in an undesired manner is collected in the collecting means. Thus, contamination of the environment of the conveying apparatus is prevented in an even better manner.

The invention moreover relates to a conveying apparatus comprising a collecting apparatus according to the invention, in particular suitable for applying a method according to the invention.

Advantageous further exemplary embodiments of a method and apparatus according to the invention are given in the further subclaims.

Hereinafter, to specify the invention, exemplary embodiments of a method and apparatus according to the invention will be described with reference to the accompanying drawings. In these drawings:
Fig. 1 is a partially sectional side elevation of a conveying apparatus according to the invention, comprising a collecting apparatus according to the invention;
Fig. 2 shows a cross section of an apparatus, taken on the line B-B in Fig. 1; and
Fig. 3 shows an alternative embodiment of an apparatus according to the invention, in cross section.

In this description, identical or corresponding parts have identical or corresponding reference numerals.

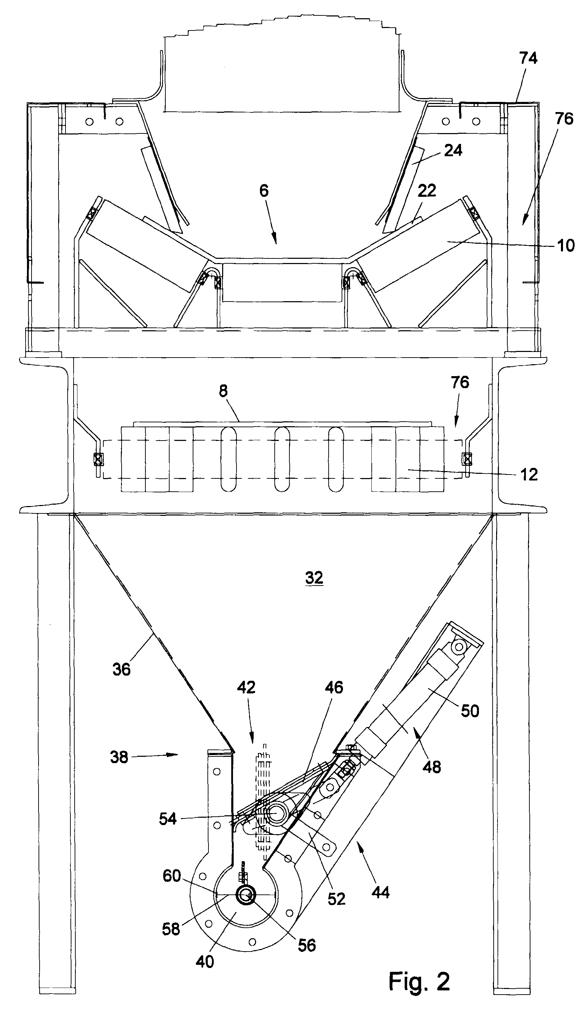

A conveying apparatus 2 according to the invention comprises a conveyor belt 4 having an upper conveying part 6 and a lower return part 8. The conveying part 6 has a troughed section (Fig. 2), such that a relatively large amount of bulk material, for instance powdery or granular material (not shown), can be carried thereon. The conveyor belt 4 is supported by rollers 10, 12 for the conveying part 6 and the return part 8 respectively. The conveyor belt 4 is endless and is driven in a customary manner by a drive mechanism 16, and is passed around by end rollers 14. Adjacent a first end 18, a pour-over apparatus 20 is arranged above the conveying part 6, for dumping material to be conveyed onto the conveyor belt 4, with the provision of guide plates 24 abutting against the raised edges 22 of the conveying part 6, to prevent bulk material from falling over the raised edges 22. At the second end 26, further pour-over means 28 are provided, whereby bulk material supplied by the conveyor belt 4 can for instance be transferred to further conveying means, a packaging apparatus or further processing means.

A type of conveying apparatus 2 described hereinabove is in itself generally known from practice and can be designed in various forms, depending on, inter alia, the bulk material to be conveyed and conditions of use.

Extending along the lower side of the conveying apparatus 2 is a collecting apparatus 30 for collecting material falling next to or at least from the conveyor belt 4. For instance in the pour-over apparatus 20, this material may fall next to the raised edges 22 due to vibrations, or may fall from the conveying part 6 or from the return part 8 otherwise. Such material must be collected to prevent fouling, dangerous situations and product loss.

The collecting apparatus 30, which in the exemplary embodiment shown, viewed in longitudinal direction of the conveyor belt 4, is divided into three interconnecting parts 30a, 30b, 30c, extends over substantially the entire length of the conveyor belt 4 between the end rollers 14, and has, at least adjacent the upper side thereof, a width greater than the width of the conveyor belt 4.

The three parts 30a-30c of the collecting apparatus 30 are substantially identical in shape. Part 30a will be described as example.

Part 30a comprises troughed collecting means 32 having two inclined end walls 34 and two inclined sidewalls 36. The collecting means 32 taper towards the bottom. Adjacent the lower end 38, a discharge channel 40 connects to the collecting means 32, said discharge channel having a substantially circular cross section and a surface area that is considerably smaller than the surface area of the collecting means 32. Provided between the collecting means 32 and the discharge channel 40 is an inlet opening 42, having closing means 44 fitted therein, which closing means comprise a pivotable valve 46. In the first position, shown in Fig. 2 in full lines, the valve 46 closes off the inlet opening 42. By operating means 48, the valve 46 can be pivoted from the first position into a second position, shown in Fig. 2 in broken lines, with the valve 46 extending approximately vertically, thus releasing the inlet opening 42. The operating means 48 comprise a pneumatic piston 50 whereby the valve 46 can be moved between the first and the second position, by means of a swivel arm 52. Such operating device 48, as well as possible variants thereto, is directly clear to anyone skilled in the art. The valve 46 is pivotally bearing-mounted on a shaft 54 extending in the longitudinal direction of the apparatus.

In the discharge channel 40, a pivot 56 is provided, extending in the longitudinal direction and through the center thereof, which pivot has a plate-shaped agitating body 58 mounted thereon, extending on either side thereof. Adjacent the first end 18 of the apparatus, a drive mechanism 57 is arranged on the pivot 56, for rotating the agitating body 58 around the pivot 56. The agitating body 58 has its longitudinal edges provided with slightly resilient lips 60 abutting against the relatively smooth inside surface of the discharge channel 40. Accordingly, upon rotation of the agitating body 58, the lips 60 will abut against the inside of the discharge channel 40 and carry along material therefrom. The purpose hereof will be further discussed hereinbelow.

Adjacent said first end 18 of the conveying apparatus 2, the discharge channel 40 extends beyond the part 30c of the collecting apparatus 30 by a suction part 62. Provided in this suction part 62 are a number of preferably slot-shaped suction openings 64 for drawing in air, in particular ambient air, into the discharge channel 40.

Between the different parts 30a and b, and 30b and c, the discharge channel parts 40 are intercoupled by coupling pieces 66. The end 68 of the discharge channel 40, which end is located adjacent the second end 26 of the apparatus 2, constitutes an outlet opening 70 through which material can be discharged from the discharge channel 40. To this outlet opening, a cyclone filter or other separating means (not shown) can be connected, the purpose of which will be further described hereinbelow. Moreover, suction means 72 are connected to the outlet opening 70 for generating in the discharge channel 40 an air stream from the suction openings 64 to the separating means, at least to the outlet opening 70. The filter can for instance be accommodated between the suction means 72 and the outlet opening 70. The suction means 72 may be of a relatively simple design, known per se, for instance utilizing a relatively simple fan, compressor or the like.

Provided around at least the pour-over apparatus 20, the relevant part of the conveyor belt 4 extending therebelow, and along the sides of the apparatus, yet preferably around the entire conveyor belt, is a housing 74 (Fig. 2) which is substantially closed and connects to the collecting means 32. Provided between the conveyor belt 4, the housing 74 and, if necessary, in the conveyor belt 4, are openings 76 for letting through material that may have fallen next to or from the conveyor belt, so that it can be collected in the collecting means 32. This substantially closed housing 74 has the advantage that material is effectively prevented from disappearing towards the environment.

An apparatus 2 according to the invention can be employed as follows.

The conveyor belt 4 is driven in the direction of the second end 26, with material being dumped on the conveying part 6 via the pour-over apparatus 24. Adjacent the second end 26, this material is dumped in the further pour-over means 28 for further processing. A part of the material will be carried along with the return part 8. A portion of this material can be scraped from the conveyor belt 4 by, for instance, scraping means 78, and can as yet end up in the further pour-over means 28, but a portion will be carried along further and come loose as yet, for instance due to vibrations and contact with the return rollers 12. Moreover, material will fall alongside the conveyor belt 4 through the openings 76. All this falling material is collected in the collecting means 32. By the operating means 48, the valve 46 is moved into the closed, first position, such that falling material within the collecting means 32 will land on the valve 46. At a desired moment, for instance when sufficient material has landed on the valve 46, the valve is controlled into its open, second position by the operating means 48, such that due to gravity, the collected material is in a first phase passed from the valve 46 into the discharge channel 40. By the suction means 72, an air flow is generated in the discharge channel 40.

Directly after the material has fallen from the valve 46, the valve 46 is again moved into its closed, first position, such that a closed discharge channel 40 is obtained. In a second phase, an air flow is generated in the discharge channel 40, which air flow has for instance an air velocity of from 30 to 40 m per second, depending on the type of material. In this air flow, a substantial part of the material that has fallen into the discharge channel 40 is carried along, through the outlet opening 70 and into the cyclone filter, in which the material can be separated from the air. Possibly, this material can be reused, for instance by adding it to the further pour-over means 28. If a portion of the material will remain behind in the discharge channel 40, or at least will not be directly entrained by the air flow, it is preferred that said agitating means 58 be actuated, such that the material in question is carried along by the lips 60, at least by the agitating body 58, and is brought back into the air flow. This is effected in that material carried along by the agitating body 58, at an approximately vertical position thereof, will fall into the air flow and will as yet be carried along. The advantage thus achieved is that in a particularly simple and fast manner, all the material that has fallen into the discharge channel 40 can be removed from the discharge channel 40 by the air flow, so that this material is prevented from mixing with fallen material of a next load of dumped material.

During use, the valves 46 of the different parts 30a-30c can be operated independently of each other. The advantage thus achieved is that in each case, only a relatively small portion of the discharge channel 40 is opened to the discharge means 32, which limits the amount of false air drawn in. This means that in each case, a relatively substantial air flow can be maintained without this requiring particularly heavy and complex means. Moreover, this readily prevents the situation that accumulation of the material in the discharge channel 40 will cause blockage of the discharge channel 40. Further, this yields the advantage that a desired, for instance uniform distribution of the fallen material over the discharge channel can be realized, or at least a constant distribution by controlling each valve 46 depending on the amount of fallen material. Moreover, this has the advantage that the valves 46 can be of a relatively light design, while the apparatus 2 can have a relatively great length. Also, the fact that the valve 46 is in each case controlled into its open position for only a relatively short period, has the advantage of involving little loss of pressure in the discharge channel 40.

In particular during batchwise or chargewise processing of material, the advantage that can be achieved with an apparatus according to the invention is that mixing of material from different batches is prevented, also when material from the discharge channel 40 is fed back, due to the fact that the discharge channel 40 can be emptied quickly.

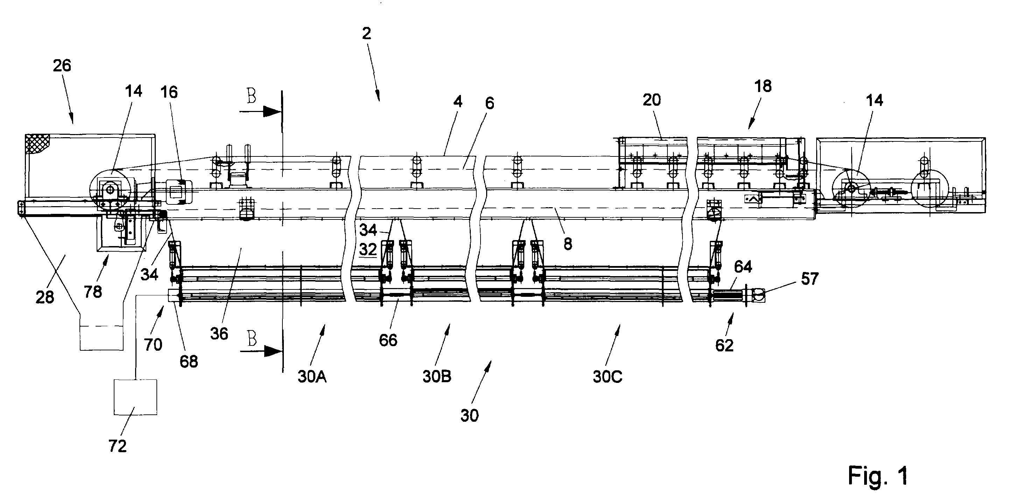

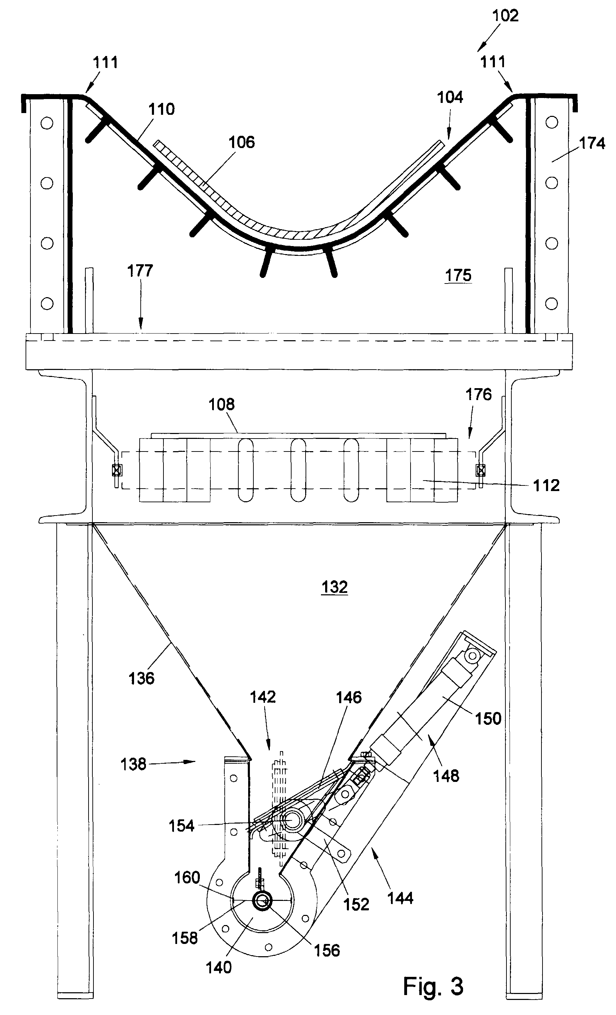

Fig. 3 shows an alternative embodiment of an apparatus according to the invention, whose collecting apparatus 132, as far as construction is concerned, corresponds with the collecting apparatus as described with reference to Figs. 1 and 2. Identical or corresponding parts have the same reference numerals, increased by one hundred. Hence, a further discussion thereof is substantially omitted.

In this embodiment, an apparatus 102 according to the invention comprises a conveyor belt 104 whose conveying part 106 is supported by a troughed plate part 110. The plate part 110 is closed and carries *and* forms the troughed conveyor belt 104 that is slidingly guided. The longitudinal edges 111 of the plate-shaped part 110 are fixedly connected to the housing 174, to form, below the plate-shaped part 110, a closed inner space 175 which can communicate with the collecting means 132 via openings 176. Optionally, the inner space 175 may have its lower side closed off by a plate part 177 for reducing the space communicating with the collecting means 132. In such embodiment, which is in particular suitable for relatively narrow conveyor belts and/or conveyor belts having a relatively small length, this yields the advantage that material cannot fall from the conveying part 106 of the conveyor belt 104 to the collecting means. After all, this is prevented by the closed plate 110. In such embodiment, material can already be discharged through the discharge channel 140 when the valve is open, in particular when the valves 146 have a relatively small length, as in such embodiment the amount of false air drawn in is limited considerably, so that sufficient air flow is maintained in the discharge channel 140.

The invention is by no means limited to the preferred embodiment of an apparatus and method shown in the description of the drawings. Many variations thereto are possible within the framework of the invention as laid down in the appended claims.

For instance, the collecting apparatus may be shaped otherwise and may for instance extend below the conveyor belt in one piece or in several pieces, with the inclusion of several discharge channels 40 side by side. Also, several inlet and outlet openings may be provided, and these may be positioned differently relative to the collecting means and the discharge channel. The apparatus may be designed for the use of other air velocities, which may or may not be intermittent.

Further, the closing means may be of different design, for instance through the use of several valves, slides and the like. However, it is important that the at least one inlet opening 42 can selectively be opened or closed for letting through and collecting fallen material respectively. Further, the agitating means may be omitted from the or each discharge channel when, for instance, material is collected that is so light that it will always be carried along completely, or at least sufficiently, by the air flow. Further, the agitating means may of course be designed differently, for instance as reciprocating means, brush means or the like. In the embodiments shown, a conveyor belt 4 is employed, yet other conveying means may be used as well, such as chain and link belts, modular belts, vibrating channels and the like. Moreover, the material to be conveyed may be moved onto the belt or removed therefrom in other manners. Also, the conveying apparatus may be designed for conveying other products, wherein small parts such as granules, crumbs or powder may come loose, which small parts can then the collected in the collecting means and discharged via the discharge channels. Also, instead of suction means, blowing means may be utilized, arranged for blowing the material out of the discharge channel at least when the valve is closed. Also, an air flow may already be generated in the discharge channel while the material is falling therein, so that a substantial part of the falling material is directly entrained in the air flow. In each part of the collecting apparatus, several valves may be included next to and behind one another, viewed in conveying direction, which valves are operable depending or not depending on each other, with the advantages described hereinabove. Further, control and operating means may be provided for the (semi)automatic operation of at least the suction means and the valves, for obtaining a particularly simple operation of the apparatus.

These and many comparable variations are understood to fall within the framework of the invention, as defined in the appended claims.

## Claims

1. A method for collecting and discharging relatively light, in particular granular or powdery material falling from conveying means, wherein the material is collected in collecting means and discharged via a discharge channel, wherein the discharge channel is substantially gutter-shaped and provided, on at least one side thereof, with an inlet opening which is closable by closing means, wherein during use, during a first phase, material is fed into the discharge channel, via the at least one inlet opening, after which the closing means are closed, wherein at least in a second phase, an air flow is generated in the discharge channel and material received in the discharge channel is discharged from the discharge channel via an outlet opening by the air flow.

2. A method according to claim 1, wherein at least during a part of the second phase, material falling from the conveying means is collected by, at least against the closing means that have been brought into the closed position, wherein by opening the closing means at least partially, the first phase is initiated.

3. A method according to claim 1 or 2, wherein also during at least a part of the first phase, an air flow is generated in the discharge channel, preferably by means of reduced pressure.

4. A method according to any one of the preceding claims, wherein at least during a part of the second phase, agitating means are moved in or at least through a portion of the discharge channel, for removing material from the walls of the discharge channel.

5. An apparatus for collecting and discharging relatively light, in particular granular or powdery material for instance falling from conveying means, said apparatus comprising collecting means, at least one discharge channel and discharge means, in particular air-control means, wherein the at least one discharge channel connects, via at least one inlet opening, to the collecting means, wherein closing means are provided for closing the or each inlet opening in at least a first position, and for at least partially releasing the at least one inlet opening for fallen material in a second position, and wherein the at least one discharge channel is provided with at least one outlet opening, wherein the discharge means are arranged for generating in the at least one discharge channel, at least when the closing means are in the first position, an air flow for discharging, via the at least one outlet opening, material included therein.

6. An apparatus according to claim 5, wherein the closing means comprise at least one valve, preferably disposed adjacent the upper side of the relevant discharge channel and arranged for collecting, during use, in the first position, at least a portion of material falling into the collecting means, wherein said collected material, when the relevant valve is in the second position, can move from the valve through the relevant inlet opening into the discharge channel.

7. An apparatus according to claim 5 or 6, wherein the discharge means comprise mechanical means extending in at least a portion of the at least one discharge channel and designed for dislodging, during use, material included in the relevant discharge channel from the walls thereof.

8. An apparatus according to claim 7, wherein the mechanical means comprise at least a body which is pivotable or rotatable in the relevant discharge channel relative to at least the longitudinal axis thereof, wherein, during use, at least a portion of the relevant body, during pivoting or rotation thereof, contacts or at least comes near at least a portion of the inner side of the wall of the discharge channel.

9. An apparatus according to any one of claims 5-8, wherein the discharge means comprise air pressure regulating means for generating or at least maintaining, during at least a portion of the service time, a reduced pressure in at least the or each discharge channel relative to the environment.

10. An apparatus according to any one of claims 5-9, wherein the collecting means slightly taper in the direction of the at least one inlet opening, wherein the at least one discharge channel is arranged adjacent the lower side thereof and has a substantially rounded, preferably circular cross section and relatively smooth walls, wherein the collecting means, during use, extend under substantially the entire lower side of the relevant conveying means, said conveying means comprising a conveying face, wherein a substantially closed housing is provided which can surround the conveying face and connects to the upper side of the collecting means, and wherein, during use, passage openings are provided between the housing and the conveying face and/or in the conveying face.

11. An apparatus according to any one of claims 5-10, wherein control means are provided for periodically controlling the closing means into their open and closed position, such that in each case, a portion of the or each inlet opening can be opened, while other parts thereof are closed.

12. A conveying apparatus, comprising an apparatus according to any one of claims 5-11, in particular suitable for using a method according to any one of claims 1-4.
